# NEUE EUROPÄISCHE PATENTSCHRIFT

(11) **EP 0 635 225 B2**
(45) Veröffentlichungstag und Bekanntmachung des Hinweises auf die Entscheidung über den Einspruch: **05.06.2002**
(45) Hinweis auf die Patenterteilung: 16.04.1997
(21) Anmeldenummer: 94109106.8
(22) Anmeldetag: 14.06.1994
(51) Int. Cl.: A47B 31/02, A47J 39/02

(54) **Warmspeisenausgabe**
Warmed food server
Distribution de plats chauds

(30) Priorität: 21.07.1993 DE 9310919 U
(43) Veröffentlichungstag der Anmeldung: 25.01.1995
(73) Patentinhaber: Eisfink Max Maier GmbH & Co. KG, 71636 LUDWIGSBURG (DE)
(72) Erfinder: Frank, Friedhelm, D-76227 Karlsruhe (DE)
(74) Vertreter: Menges, Rolf, Dipl.-Ing.

(56) Entgegenhaltungen:
- DE-A- 2 353 173
- DE-A- 2 442 852
- DE-A- 3 331 679
- DE-A- 3 824 413
- DE-C- 432 991
- GB-A- 2 140 678

## Beschreibung

Die Erfindung betrifft eine Warmspeisenausgabe nach dem Oberbegriff des Anspruchs 1.

Eine solche Warmspeisenausgabe ist aus der DE-A1-24 42 852 bekannt, auf die weiter unten noch näher eingegangen wird.

Herkömmliche Warmspeisenausgaben, welche international unter dem Begriff Bain-marie bekannt sind, sind durch die deutsche Norm, DIN 18865 Teil 2, genormt. Solche Warmspeisenausgaben bestehen aus einem Warmhaltebecken mit einem nach oben offenen Ausschnitt zur Aufnahme von wenigstens einem Speisenausgabebehälter. Der Speisenausgabebehälter, welcher warm zu haltende, üblicherweise fertig gegarte Speisen enthält, hat kleinere Abmessungen als das Warmhaltebecken, so daß zwischen dem Warmhaltebecken selbst und dem Speisenausgabebehälter heißes Wasser eingefüllt werden kann. Üblicherweise ist eine Warmspeisenausgabe auch mit einer unterhalb des Warmhaltebeckens angeordneten Heizeinrichtung versehen zum Aufheizen des eingefüllten Wassers und zum Konstanthalten der Wassertemperatur. Darüber hinaus gibt es Warmspeisenausgaben, welche nicht mit heißem Wasser, also nicht mit einem Wasserbad arbeiten, sondern mit Warmluft, die in das Warmhaltebecken eingleitet wird.

Je nachdem, um welche Art von Warmspeisenausgabe es sich handelt, wird der in das Warmhaltebecken eingesetzte Ausgabebehälter von unten her entweder durch Eintauchen in ein heißes Wasserbad oder durch sich an der Außenfläche des Ausgabebehälters niederschlagenden Wasserdampf oder durch Wärmeübertragung von den Ausgabebehälter umströmender Warmluft aus beheizt.

Warmspeisenausgaben müssen strenge Anforderungen erfüllen, die in der o.g. DIN-Norm festgelegt sind, damit gewährleistet ist, daß sich die zum Verzehr warm zu haltenden Speisen über eine längere Zeit hin im Ausgabebehälter nicht zu stark abkühlen, sondern eine Ausschöpftemperatur von etwa 60 - 65°C behalten. DIN 18865 Teil 2, Ziffer 6.2.1, schreibt zu Prüfzwecken vor, daß eine Warmspeisenausgabe in der Lage sein muß, daß bei einem bis zu 80 % seines Fassungsvermögens mit 70° C heißem Wasser gefüllten Speisenausgabebehälter im Zeitraum von einer Stunde die Temperatur des Wassers nicht unter 60° C absinkt. Diese Anforderung kann von den meisten herkömmlichen Warmspeisenausgaben nicht erfüllt werden.

Erschwerend kommt hierbei noch hinzu, daß die ebenfalls genormten Ausgabebehälter fünf unterschiedliche. Tiefen besitzen können und damit auf den tiefsten Ausgabebehälter ausgerichtete Warmhaltebecken sehr unterschiedlich ausfüllen. Wenn beispielsweise zuerst ein sehr tiefer Ausgabebehälter in eine mit Wasserbad arbeitende Warmspeisenausgabe eingesetzt worden ist, so ist das Warmhaltebecken mit relativ wenig Wasser gefüllt. Wird nach diesem tiefen Ausgabebehälter ein sehr flacher Ausgabebehälter eingesetzt, so ist für diesen flachen Ausgabebehälter die bisherige Wassermenge zu gering, um ihn ausreichend auf Temperatur halten zu können, da zwischen Ausgabebehälter und Wasserspiegel nun ein großes isolierendes Luftvolumen vorhanden ist. Es muß deshalb zusätzliches Wasser eingefüllt werden. Um die Menge des heißen Wassers auf die Tiefe des jeweiligen Ausgabebehälters abstimmen zu können, sind in Warmspeisenausgaben, die mit einem Wasserbad arbeiten, eine Wasserfülleinrichtung, ein Überlauf und ein Ablauf vorgesehen, was jedoch zusätzlichen Aufwand und bei Ablauf von heißem Wasser unnötigen Energieverlust mit sich bringt. Weiter nachteilig ist auch, daß durch ständiges Verdampfen des Wassers ein Überdruck zwischen Warmhaltebecken und Ausgabebehälter vorhanden ist und Wasserdampf über Spalte am oberen Rand des Warmhaltebeckens entweicht und schon deshalb oft heißes Wasser nachgefüllt werden muß. Manche Warmspeisenausgaben haben nur eine Wasserfülleinrichtung für kaltes Wasser, so daß beim Nachfüllen von Wasser das Warmhaltebecken sehr schnell wieder auf die erforderliche Temperatur aufgeheizt werden muß. Die bisher bekannten Warmspeisenausgaben erfordern deshalb sehr leistungsfähige Heizeinrichtungen mit enormem Energieverbrauch, um starke Temperaturabfälle zu vermeiden. Dies trifft auch auf Warmspeisenausgaben mit einer Warmluftwanne zu, da beim Wechseln der Ausgabebehälter die gesamte heiße Luft schnell entweicht und nach Einsetzen des anderen Ausgabebehälters die Warmluftwanne erneut vollständig wieder aufgeheizt werden muß, was besonders bei Verwendung von flachen Ausgabebehältern zeit- und energieaufwendig ist.

Ein weiterer Nachteil von mit Wasserbad beheizten Bain-maries besteht darin, daß durch deren Festinstallation wegen Wasserzufuhr und -ableitung keinerlei Flexibilität hinsichtlich des Aufstellortes gegeben ist.

Die eingangs erwähnte DE-A1-24 42 852 beschreibt eine Warmspeisenausgabe, die eine Abwandlung von einem Bain-marie darstellt. Anstelle von Wasser zur Beheizung ist eine elektrische Heizung in Form von mehreren Heizelementen oder -platten vorgesehen, wodurch das Bain-marie so verbessert werden soll, daß in den Behältern auch gekocht und nicht nur warmgehalten werden kann. Bei dieser bekannten Warmspeisenausgabe sind als Behälter ebenfalls Gastronorm-Behälter mit einem vorzugsweisen Abstand von der Heizeinrichtung von 5 mm vorgesehen. Der erforderliche Energieaufwand steigt, wenn statt eines bestimmten Gastronorm-Behälters ein anderer Behälter zum Beispiel mit anderer Tiefe, benutzt wird.

Aufgabe der Erfindung ist es, eine Warmspeisenausgabe nach dem Oberbegriff des Patentanspruchs 1 so zu verbessern, daß unterschiedlich tiefe Ausgabenbehälter zur Ausgabe warm zu haltender Speisen benutzt werden können, ohne den Energieaufwand zum Aufrechterhalten einer vorgeschriebenen Ausschöpftemperatur über einen längeren Zeitraum zu erhöhen.

Diese Aufgabe ist durch die Merkmale des Anspruchs 1 gelöst.

Da bei der erfindungsgemäßen Warmspeisenausgabe eine elektrische Heizplatte als Heizeinrichtung unter dem Speisenausgabebehälter höhenverstellbar angeordnet ist, kann der Abstand zwischen Heizplatte und Ausgabebehälter auch bei unterschiedlich tiefen Ausgabebehältern stets auf den optimalen Wert gebracht werden. Damit können Energieverluste durch unnötiges Aufheizen von Wasser und/oder Luft zwischen Warmhaltebekken bzw. Warmluftwanne und Ausgabebehälter vermieden werden. Mit der Glaskerquikplatte als Abdeckteil wird erreicht, daß die abgestrahlte Wärme gleichmäßig an die über der Heizplatte angeordneten Ausgabebehälter abgegeben und überdies vermieden wird, daß die Heizeinrichtung der Heizplatte durch ungewollt herabfallende Gegenstände oder Speisen beschädigt oder beschmutzt werden kann. Das Abdeckteil wird zweckmäßig so ausgebildet, daß es leicht herausgenommen und gesäubert werden kann.

Die Höhenverstellbarkeit eines Heizelements ist zwar aus der deutschen Patentschrift 432 991 an sich bekannt, dort ruht jedoch der Behälter über einem Tablett direkt auf der Heizplatte, deren Höhenverstellbarkeit daher einem anderen Zweck dient.

Eine Art Höhenverstellbarkeit zur Einstellung des Abstandes zwischen einem Behälter und einer Heizplatte ist auch aus der GB 14 22 283 an sich bekannt. Diese beschreibt eine beheizbare Tischplatte, wie sie zum Beispiel bei einem Fondue-Essen eingesetzt werden kann. In die Tischplatte sind feuerfeste Steine eingelassen, die jeweils einen nach oben offenen Hohlraum haben, in den ein Behälter einsetzbar ist. Am Boden der feuerfesten Steine befindet sich ein zusätzliches elektrisches Heizelement, das eine Heizplatte wie bei einem elektrischen Ofen bildet. Zur Einstellung des Abstandes zwischen Behälter und Heizelement wird hier aber nicht die Heizplatte verstellt, sondern der Behälter.

Vorteilhafte Ausgestaltungen der Erfindung bilden die Gegenstände der Unteransprüche.

In der Ausgestaltung der Erfindung nach Anspruch 2 ist die Heizplatte eine Strahlungsheizplatte.

Bei der Warmspeisenausgabe nach der Erfindung besitzt die Heizplatte üblicherweise eine elektrische Widerstandsheizeinrichtung, ähnlich wie bei einem Elektroherd.

In der Ausgestaltung der Erfindung nach den Ansprüchen 4 und 5 hat die Heizplatte eine elektrische Induktioncheizeinrichtung bzw. Halogenlichtheizeinrichtung. Eine Halogenlichtheizeinrichtung besteht vereinfacht ausgedrückt aus einer auf den zu beheizenden Ausgabebehälter gerichteten Halogenlampe, welche wegen ihrer schnellen Heizwirkung besondere Vorteile hat.

Die Heizplatte selbst kann durch verschiedene Möglichkeiten in ihrer Höhe eingestellt werden, beispielsweise in der Ausgestaltung der Erfindung nach Anspruch 6, indem in einem Gehäuse der Warmspeisenausgabe Ausnehmungen in verschiedenen Höhen vorgesehen werden, über die die Heizplatte in unterschiedlichen Höhen befestigbar ist. Es kann aber auch eine höhenverstellbare Bodenplatte in der Ausgestaltung der Erfindung nach Anspruch 7 vorgesehen werden, auf der die Heizplatte aufliegt. Besonders vorteilhaft ist es, wenn die Heizplatte dabei stufenlos höhenverstellbar ist.

Wenn die Höhenverstellbarkeit in der Ausgestaltung der Erfindung nach Anspruch 9 so ausgelegt ist, daß die Heizplatte annähernd bündig mit einem oberen Abschluß des Gehäuses (z. B. der Arbeitsplatte der Warmspeisenausgabe) ist, kann direkt auf die Heizplatte ein Gefäß zum Warmhalten gestellt werden oder die Heizplatte kann als Grillplatte verwendet werden. Eine derartige Warmspeisenausgabe ist besonders universell einsetzbar, was bei heutigen Ausgabeanlagen zunehmend zweckmäßig ist, da immer öfter direkt vor dem Kunden auf Bedarf hin gegrillt und gekocht wird.

Ein weiterer Vorteil dieser Variabilität stellt z. B. im Frühstückgeschäft die Möglichkeit dar, daß je nach Bedarf nur eine Heizplatte offen ist und die übrigen dann mit einem Abdeckteil z. B. Granitplatten abgedeckt werden können, so daß dann die restliche Fläche als beheiztes Teil ebenso verwendet werden kann.

Für Restaurants, Cafeterias, Biergärten oder dergleichen ist die Warmspeisenausgabe in der mobilen Ausgestaltung der Erfindung nach Anspruch 10 besonders geeignet, da sie zumindest zeitweise stromunabhängig arbeiten und/oder an beliebigen Orten aufgestellt werden kann.

Ausführungsbeispiele der Warmspeisenausgabe nach der Erfindung werden im folgenden unter Bezugnahme auf die Zeichnungen näher beschrieben.

Es zeigt
- Fig. 1: eine Querschnittansicht einer Ausgabetheke mit einer integrierten Warmspeisenausgabe nach der Erfindung,
- Fig. 2: eine Teildraufsicht auf die Warmspeisenausgabe nach Fig. 1,
- Fig. 3: einen Rohrrahmen als Teil eines Gehäuses einer Warmspeisenausgabe nach Fig. 1 gemäß einer ersten Ausführungsform der Erfindung,
- Fig. 4: eine mittels Gestänge höhenverstellbare Bodenplatte als Teil der Warmspeisenausgabe gemäß einer zweiten Ausführungsform der Erfindung, und
- Fig. 5: eine Seitenansicht einer einzelnen elektrischen Heizplatte.

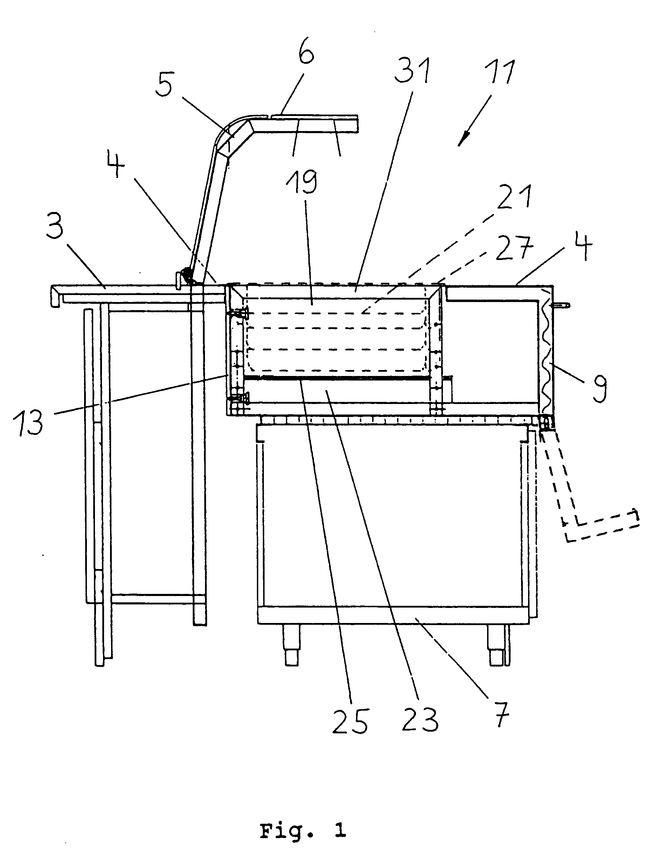

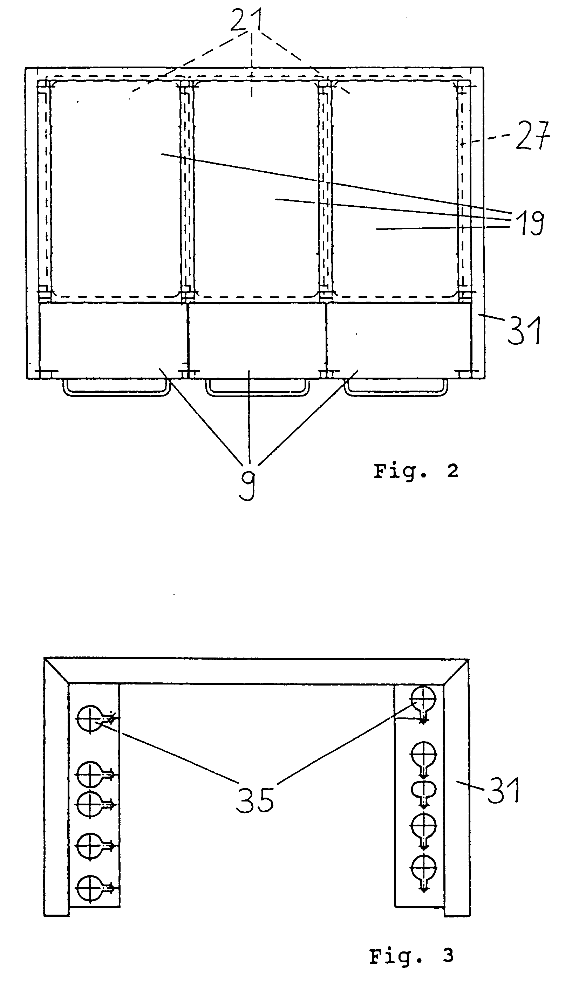

In Fig. 1 ist eine Ausgabetheke im Querschnitt gezeigt, wie sie in Linien-Cafeterias oder Free-Flow-Cafeterias üblich ist. Die Ausgabetheke umfaßt eine Tablettrutsche 3, die sich hier in Höhe einer Arbeitsplatte 4 befindet, einen Hustenschutz 5 mit Übergabefläche 6 sowie eine Warmspeisenausgabe 11. die mit einem Untergestell 7 verbunden ist. Die Warmspeisenausgabe 11 besitzt ein seitlich und vorn zur Tablettrutsche 3 hin geschlossenes Gehäuse 13 aus Chromnickelstahl und darin einen Rohrrahmen 31 ebenfalls aus Chromnickelstahl. Auf der zum Bedienpersonal hin gerichteten Seite (in Fig. 1 rechts) ist eine nach unten klappbare Frontklappe 9 vorgesehen, die den Zugang zu dem Inneren der Warmspeisenausgabe 11 ermöglicht. Das Gehäuse 13 ist nach oben hin offen, denn es besitzt einen Ausschnitt 19 (in den Fig. 1 und 2 gestrichelt angedeutet) zum Aufnehmen zumindest eines Speisenausgabebehälters 21, der mit warm zu haltenden, üblicherweise fertig gegarten Speisen gefüllt ist. Der Ausgabebehälter 21 hat einen seitlich stark vorstehenden Auflagerand 27, so daß der Ausgabebehälter 21 nach Einsetzen in die Warmspeisenausgabe 11 mit dem Auflagerand 27 auf dem Rohrrahmen 31 seitlich vom Gehäuse 13 aufliegt.

Die in Fig. 1 gezeigte Ausgabetheke ist relativ lang, so daß mehrere Ausgabebehälter 21 nebeneinander in den Ausschnitt 19 der Warmspeisenausgabe 11 einsetzbar sind. Je nach Art der Speisen sind die Ausgabebehälter 21 unterschiedlich tief, wie in Fig. 1 zu Erläuterungszwecken für vier mit unterbrochenen Linien dargestellte Ausgabebehälter 21 zu erkennen ist (von denen selbstverständlich jeweils nur einer gleichzeitig in den Ausschnitt 19 eingesetzt sein wird).

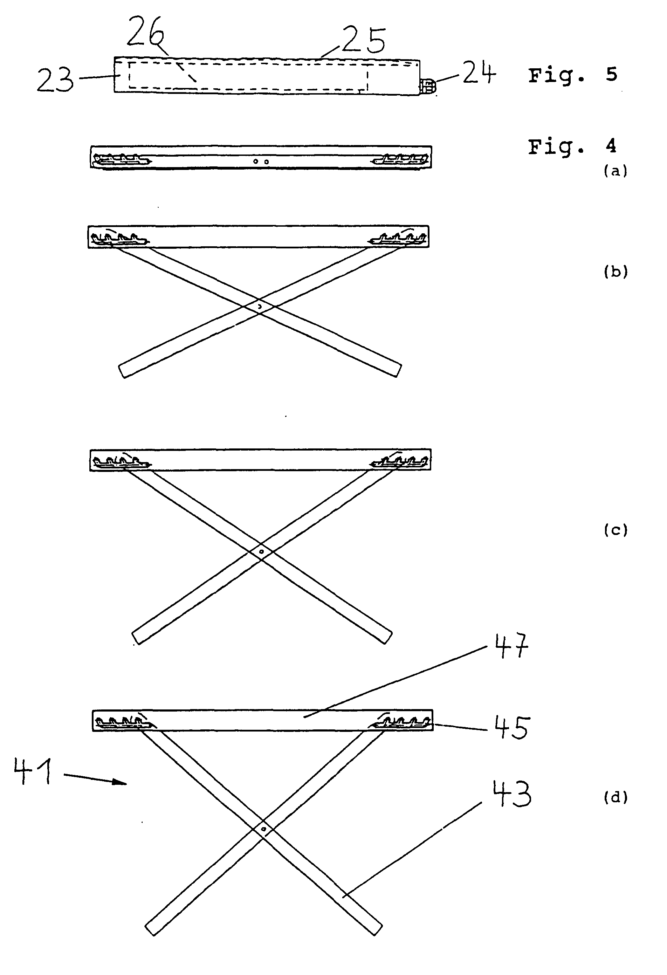

Unterhalb des Ausgabebehälters 21 ist eine Heizeinrichtung in Form einer Heizplatte 23 vorgesehen, welche über einen in Fig. 5 lediglich angedeuteten elektrischen Anschluß 24 verfügt. Die Heizplatte 23 enthält einen Strahlungsheizkörper 26, wie er beispielsweise von der Firma E.G.O. Elektro-Gerätebau GmbH, Oberderdingen, angeboten wird (vgl. Produkt-Liste Nr. 941, S. 6 und 7). Gegenüber dem Ausgabebehälter 21 ist der Strahlungsheizkörper 26 mit einer Glaskeramikplatte 25 abgedeckt, mit der er in engem Kontakt ist.

In Fig. 2 ist zu erkennen, daß die hier beschriebene Warmspeisenausgabe 11 so dimensioniert ist, daß sie drei Ausgabebehälter 21 nebeneinander aufnehmen kann. Die drei Ausgabebehälter 21 sind in Fig. 2 ebenfalls in unterbrochenen Linien dargestellt. Die Warmspeisenausgabe 11 nach Fig. 2 besitzt insgesamt drei Heizplatten 23, d.h. eine Heizplatte 23 pro Ausgabebehälter 21.

Je nach Tiefe des eingesetzten Ausgabebehälters 21 wird vor oder nach dem Einsetzen die Heizplatte 23 in ihrer Höhe so eingestellt daß nur ein geringer Abstand zwischen der Oberseite der Helzplatte 23 und der unteren Fläche des Bodens des Ausgabebehälters 21 vorhanden ist. Durch die von der Heizplatte 23 abgegebenen langwellige Strahlung wird ein direkter Wärmeübergang zu dem darüber angeordneten Ausgabebehälter 21 ermöglicht. Um zu verhindern, daß die auf dem Boden des Ausgabebehälters 21 aufliegenden Speisen zu heiß werden und anbrennen, ist ein Luftspalt zwischen Behälterunterseite und Heizplatte 23 von ca. 5 mm besonders vorteilhaft.

Die Höhenverstellbarkeit der Heizplatte 23 kann durch unterschiedliche Einrichtungen erreicht werden. Eine erste Ausführungsform einer solchen Einrichtung ist in Fig. 3 gezeigt. Dabei ist der Rohrrahmen 31 mit mehreren paarweise links und rechts angeordneten Ausnehmungen 35 versehen, in die nicht gezeigte Auflagewinkel einklinkbar sind. Die Ausnehmungen 35 sind auf unterschiedliche Tiefen von Ausgabebehältern 21 abgestimmt. Die Lage jeder Heizplatte 23 kann damit bei geöffneter Frontklappe 9 der Tiefe des jeweiligen Ausgabebehälter 21 angepaßt werden, indem die Heizplatte 23 aus der Warmspeisenausgabe 11 herausgezogen und auf in entsprechender Höhe angebrachte Auflagewinkel aufgesetzt wird.

Neben den in Fig. 3 gezeigten Ausnehmungen 35 sind andere Einrastmechanismen oder Auflagemöglichkeiten für die Heizplatte 23 denkbar, die deren Höhenverstellbarkeit gewährleisten (z. B. Hubtisch, Scherentisch).

Fig. 4 zeigt eine zweite Ausführungsform einer Einrichtung 41 zum Höhenverstellen der Heizplatte 23, die in vier Phasen (a) - (d) der Einstellung eines Scherengestänges 43 dargestellt ist. Die Einrichtung 41 besteht aus einer höhenverstellbaren Bodenplatte 47 auf dem Scherengestänge 43. Das Scherengestänge 43 und die Bodenplatte 47 sind über eine Verriegelungseinrichtung 45 so miteinander verbunden, daß die Bodenplatte 47 in mehreren Stellungen einrastet. Die Bodenplatte 47 ist im Inneren der Warmspeisenausgabe 11 stehend angeordnet. Auf der Bodenplatte 47 liegt die Heizplatte 23 auf, welche mittels des Scherengestänges 43 höhenverstellbar ist.

Darüber hinaus ist auch eine stufenlos höhenverstellbare Bodenplatte denkbar, welche über ein Spindelsystem, das über ein von außen zu bedienendes Handrad betätigt werden kann, auf- und abfahrbar ist.

Die Bodenplatte 47 ist so ausgelegt, daß in ihrer ganz hohen Position die Heizplatte 23 bündig mit der den Ausschnitt 19 umgebenden Arbeitsplatte 4 der Warmspeisenausgabe 11 ist. In dieser Stellung kann die Heizplatte 23 als Kochstelle, Grillplatte oder Warmhalteplatte benützt werden, auf der beispielsweise ein Wok, große Pfannen oder kleine Schälchen individuell aufgestellt und beheizt oder warmgehalten können oder auf der direkt gegrillt werden kann.

Ist das Untergestell 7 mit Rollen versehen, so kann die Warmspeisenausgabe 11, wenn sie mit entsprechend langem Netzanschlußkabel versehen ist, zum gewünschten Ausgabeort gefahren werden. Sie könnte aber auch nach dem Aufheizen der Heizplatten vom Netz getrennt und dann zum Ausgabeort gefahren werden.

Wenn die Heizeinrichtung der Heizplatte 23 eine Induktionsheizeinrichtung ist, so kann diese so wie bei heutigen Induktionselektroherden üblich ausgebildet sein und statt des elektrischen Strahlungsheizkörpers 26 vorgesehen werden. Entsprechendes gilt, wenn statt des Strahlungsheizkörpers 26 eine Halogenlichtheizeinrichtung benutzt wird. In beiden Fällen hätte mit Ausnahme der Art der verwendeten Heizeinrichtung die Heizplatte 23 den in Fig. 5 gezeigten Aufbau.

Abschließend noch einmal die Vorteile der oben beschriebenen Warmspeisenausgabe:
1. Nur ein Elektroanschluß
2. Kein Wasserzu- und -ablauf
3. Die Wärmequelle ist individuell den Bedürfnissen entsprechend einstellbar
   Dadurch ist der Einsatz von nicht genormten Ausgabebehältern möglich.
4. Eine starre Ausrichtung nach der Größe von Ausgabebehältern entfällt.
5. Durch den Einsatz von Strahlungsheizplatten mit Glaskeramikplatten oder durch den Einsatz einer Induktionsheizeinrichtung sind weitaus geringere Energieverluste vorhanden.
6. Erhöhung der Schöpftemperatur von über 65° C im Ausgabehälter möglich bei weniger Energiezufuhr als bisher.
7. Durch die Höhenverstellbarkeit der Heizplatte wird die Heizplatte dem Ausgabebehälter entsprechend angepaßt.
8. Leichte Reinigung durch einfachste Ausführung des Untergestells.

## Patentansprüche

1. Warmspeisenausgabe (11) mit einem Gehäuse (13), das einen Ausschnitt (19) zum Aufnehmen von wenigstens einem Speisenausgabebehälter (21) für warm zu haltende, üblicherweise fertig gegarte Speisen und eine Heizeinrichtung zum Beheizen des Ausgabebehälters (21) aufweist, die aus wenigstens einer elektrischen Heizplatte (23) besteht,
**dadurch gekennzeichnet, daß** die Heizplatte (23) höhenverstellbar ist, damit der Abstand zwischen der Heizplatte (23) und dem Ausgabebehälter (21) auch bei unterschiedlich tiefen Ausgabebehältern stets auf den optimalen Wert gebracht werden kann, und
daß die Heizplatte (23) mit einer Glaskeramikplatte (25) als Abdeckteil versehen ist.

2. Warmspeisenausgabe nach Anspruch 1, **dadurch gekennzeichnet, daß** die Heizplatte (23) eine Strahlungcheizplatte ist.

3. Warmspeisenausgabe nach Anspruch 1 oder 2, **dadurch gekennzeichnet, daß** die Heizplatte (23) auswechselbar ist.

4. Warmspeisenausgabe nach Anspruch 1, **dadurch gekennzeichnet, daß** die Heizplatte (23) eine elektrische Induktionsheizeinrichtung hat.

5. Warmspeisenausgabe nach Anspruch 1 oder 2, **dadurch gekennzeichnet, daß** die Heizplatte (23) eine Halogenlichtheizeinrichtung umfaßt.

6. Warmspeisenausgabe nach einem der Ansprüche 1 bis 5, **dadurch gekennzeichnet, daß** in dem Gehäuse (13) Ausnehmungen (35) in verschiedenen Höhen vorgesehen sind, so daß die Heizplatte (23) höhenverstellbar ist.

7. Warmspeisenausgabe nach einem der Ansprüche 1 bis 5, **gekennzeichnet durch** eine höhenverstellbare Bodenplatte (47), auf der die Heizplatte (23) aufliegt.

8. Warmspeisenausgabe nach Anspruch 7, **dadurch gekennzeichnet, daß** zur Höhenverstellung der Bodenplatte (47) ein Scherengestänge (43) vorgesehen ist.

9. Warmspeisenausgabe nach einem der Ansprüche 1 bis 8, **dadurch gekennzeichnet, daß** die Heizplatte (23) bis in eine Höhe verstellbar ist, in der sie mit einer neben dem Ausschnitt (19) vorgesehenen Arbeitsplatte (4) bündig ist.

10. Warmspeisenausgabe nach einem der Ansprüche 1 bis 9, **dadurch gekennzeichnet, daß** die Warmspeisenausgabe mobil ausgeführt ist.

## Claims

1. Warm food server (11) having a housing (13) which includes a recess (19) for receiving at least one food serving container (21) for food which is to be kept warm and which is usually fully prepared and a heating means for heating the serving container (21), which consists of at least one electrical hot plate (23),
**characterized in that** the hot plate (23) is adjustable in height, so that the spacing between the hot plate (23) and the serving container (21) can always be set at the optimal value, even for serving containers of different depths, and
that the hot plate (23) is provided with a ceramic glass plate (25) as a covering element.

2. Warm food server according to claim 1, **characterized in that** the hot plate (23) is a radiant heating plate.

3. Warm food server according to claim 1 or 2, **characterized in that** the hot plate (23) is replaceable.

4. Warm food server according to claim 1, **characterized in that** the hot plate (23) has electrical induction heating means.

5. Warm food server according to claim 1 or 2, **characterized in that** the hot plate (23) comprises halogen lamp heating means.

6. Warm food server according to one of claims 1 to 5, **characterized in that** recesses (35) are provided at different heights in the housing (13) so that the hot plate (23) is adjustable in heigth.

7. Warm food server according to one of claims 1 to 5, **characterized by** a base plate (47) adjustable in height, on which the hot plate (23) rests.

8. Warm food server according to claim 7, **characterized in that** a scissor linkage (43) is provided for height adjustment of the base plate (47).

9. Warm food server according to one of claims 1 to 8 **characterized in that** the hot plate (23) is adjustable to a height at which it is level with a work surface (4) located adjacent to the recess (19).

10. Warm food server according to one of claims 1 to 9, **characterized in that** the warm food server is of moveable construction.

## Revendications

1. Distributeur de plats chauds (11) comportant un boîtier (13) présentant une découpe (19) pour recevoir au moins un récipient de distribution (21) contenant des plats, usuellement prêts à être consommés, qu'il s'agit de maintenir chauds, ainsi qu'un dispositif servant à chauffer le récipient (21) et qui est constitué d'au moins une plaque chauffante électrique (23).
**caractérisé en ce que**
la plaque chauffante (23) est réglable en hauteur de manière que la distance entre la plaque chauffante (23) et le récipient de distribution (21), également de profondeur variable, puisse être toujours à sa valeur optimale et la plaque chauffante (23) est équipée, en particulier d'une plaque (25) en céramique comme couvercle.

2. Distributeur de plats chauds selon la revendication 1.
**caractérisé en ce que**
la plaque chauffante (23) est du type rayonnant.

3. Distributeur de plats chauds selon une des revendications 1 ou 2,
**caractérisé en ce que**
la plaque chauffante (23) est une pièce échangeable.

4. Distributeur de plats chauds selon la revendication 1.
**caractérisé en ce que**
la plaque chauffante (23) est équipée d'un dispositif de chauffage électrique à induction.

5. Distributeur de plats chauds selon une des revendications 1 ou 2,
**caractérisé en ce que**
la plaque chauffante (23) est équipée d'un dispositif de chauffage par lampes halogènes.

6. Distributeur de plats chauds selon une des revendications 1 à 5.
**caractérisé en ce que**
le boîtier (13) présente des évidements (35) situés à différentes hauteurs de manière à permettre le réglage en hauteur de la plaque chauffante (23).

7. Distributeur de plats chauds selon une des revendications 1 à 5,
**caractérisé en ce que**
la plaque chauffante (23) est posée sur une plaque de fond (47) réglable en hauteur.

8. Distributeur de plats chauds selon la revendication 7,
**caractérisé par**
un dispositif articulé en ciseaux (43) pour régler la hauteur de la plaque de fond (47).

9. Distributeur de plats chauds selon une des revendications 1 à 8,
**caractérisé en ce que**
la plaque chauffante (23) est réglable en hauteur de manière à venir à fleur avec une plaque de travail (4) prévue près de la découpe (19).

10. Distributeur de plats chauds selon une des revendications 1 à 9,
**caractérisé en ce que**
le distributeur de plats chauds est mobile.
